# EUROPÄISCHE PATENTANMELDUNG

(11) **EP 3 800 441 A2**
(43) Veröffentlichungstag der Anmeldung: **07.04.2021**
(21) Anmeldenummer: 20195041.7
(22) Anmeldetag: 08.09.2020
(51) Int. Cl.: G01C 15/00, G01B 11/00, G01S 5/14, G01B 11/24, G01N 29/00

(54) **VERFAHREN SOWIE VERMESSUNGSVORRICHTUNG ZUR VERMESSUNG EINES BAUWERKS**

(30) Priorität: 11.09.2019 DE 102019124378
(71) Anmelder: Hydromapper GmbH, 21079 Hamburg (DE); Neumann, Ingo, 30175 Hannover (DE)
(72) Erfinder: Neumann, Ingo, 30175 Hannover (DE); Hesse, Christian, 21614 Buxtehude (DE); Holste, Karsten, 27389 Lauenbrück (DE)
(74) Vertreter: Hauck Patentanwaltspartnerschaft mbB

(57) **Zusammenfassung**

Die Erfindung betrifft ein Verfahren zur Vermessung eines Bauwerks, insbesondere zur Schadenserfassung, mittels einer sich entlang eines zu vermessenden Bauwerks bewegenden Vermessungsvorrichtung, wobei die Vermessungsvorrichtung mindestens einen Vermessungssensor zur Vermessung des Bauwerks und eine den mindestens einen Vermessungssensor tragende Trägerplattform aufweist, wobei mindestens ein Qualitätssollwert für zumindest ein die Qualität der Vermessung kennzeichnendes Qualitätsmerkmal vorgegeben wird und während der Vermessung ein oder mehrere dieses Qualitätsmerkmal beeinflussende Parameter derart geregelt werden, dass der vorgegebene Qualitätssollwert im Wesentlichen erreicht wird.

## Beschreibung

Die Erfindung betrifft ein Verfahren zur Vermessung eines Bauwerks, insbesondere zu Zwecken der Schadenserfassung an dem Bauwerk und zur Bauüberwachung. Auch betrifft die Erfindung eine Vermessungsvorrichtung zur Vermessung des Bauwerks.

Durch eine solche Vermessung eines Bauwerks kann insbesondere die äußere Kontur des Bauwerks erfasst werden. Beispielsweise kann es sich um eine Bauwerksinspektion, insbesondere die Untersuchung des Bauwerks auf Schäden und/oder Verformungen handeln. Derartige Untersuchungen werden an Bauwerken unterschiedlichster Art durchgeführt, um Schäden, die beispielsweise die strukturelle Integrität des Bauwerks gefährden könnten, rechtzeitig identifizieren und vorbeugende Maßnahmen einleiten zu können.

Bei dem Bauwerk kann es sich beispielsweise um ein Wasserbauwerk handeln, beispielsweise um eine Spundwand. Die Bauwerksinspektion von Wasserbauwerken umfasst die Bauwerksprüfung, die Bauwerksüberwachung und die Bauwerksbesichtigung. Grundsätzlich kann die Inspektion von Wasserbauwerken von Land aus oder vom Wasser aus erfolgen, wobei die Inspektion vom Wasser aus die Untersuchung des Bauwerks über und unter Wasser umfassen kann.

Bei der landgestützten Inspektion von beispielsweise Mastkonstruktionen finden die Bauwerksprüfungen regelmäßig durch Höhenkletterer durch eine visuelle Inspektion oder aber auch vereinzelt durch den Einsatz von Drohnen statt, die entsprechende Bilder von den inspizierten Bereichen erzeugen. Als weitere zerstörungsfreie Prüfmethoden finden auch das Scannen von Tunnelwänden oder der die lokale Befahrung von Seilkonstruktionen an Brückenbauwerken statt. Dabei erfolgt der Einsatz der digitalen Prüfmethoden stets als Unterstützung der handnahen, humansensorischen Prüfung.

Humansensorische Prüfungen werden auch für Bauwerksinspektionen Überwasser durchgeführt. Dies geschieht im Wesentlichen analog zur erläuterten landgestützten Überwasserinspektion. Mit wesentlich höherem Aufwand ist die Bauwerksinspektion unter Wasser verbunden. Die humansensorischen Prüfungen und Schadensaufnahmen unter Wasser mit Tauchern sind in Qualität und Quantität starken Variationen unterworfen. Insbesondere ist das Einhalten eines gewünschten Qualitätsniveaus für die Vermessung kaum zu bewerkstelligen, da die Qualität beeinflussende Merkmale nicht steuerbar sind. Schadenslage, Schadensklassifizierung und Schadensentwicklung sind bei regelmäßigen Bauwerksprüfungen aufgrund der subjektiven Wahrnehmungen nicht reproduzierbar. Ein flächiges Abtauchen findet zudem nur in Sonderfällen statt. Entweder kann das Wasser im Bauwerk gelenzt werden und die Untersuchung wird im Trockenen durchgeführt oder die unter Wasser befindlichen Konstruktionsteile werden in Abständen von rund 50-100 m abgetaucht, dabei gleitet der Taucher an der Konstruktion hinunter und versucht gleichzeitig zu strömungsbedingten Einflüssen die Konstruktion abzutasten oder im günstigsten Fall visuell zu inspizieren.

Eine Vermessungsvorrichtung mit einem Schiff, das eine Trägerplattform zieht, ist beispielsweise bekannt aus JP 2012-032273 A. Die Trägerplattform umfasst Sensoren zur Untersuchung einer Uferböschung, sowohl unter, wie auch über Wasser. Zudem verfügt die Trägerplattform über eine GPS-Antenne zur Positionsbestimmung. Aus DE 298 235 601 U1 ist eine Anordnung zur Vermessung von Gewässerprofilen bekannt, wobei ein Boot mit einem Echolot das Gewässer vermisst und ein an Land befindliches Tachymeter zudem über das Echolot ermittelten Daten Lage- und Höhenkoordinaten zuordnet. In ähnlicher Weise funktioniert auch ein aus DE 295 059 301 U1 bekanntes vermessungstechnisches Gerät.

Zur Erfassung von Objekten, wie beispielsweise Bauwerken, werden häufig zudem sogenannte Multi-Sensor-Systeme verwendet, die unterschiedliche Sensoren für Objektaufnahme und Geo-Referenzierung auf einer gemeinsamen Plattform vereinigen. Beispielsweise ist aus DE 10 2009 040 468 A1 eine von einem Menschen tragbare mobile Erfassungseinrichtung bekannt geworden, die die Erfassung über einen beweglichen Laserscanner ermöglicht. Aus DE 10 2004 028 736 A1 ist ein mit mehreren Kameras ausgestattetes Fahrzeug bekannt, bei dem die Raumkoordinaten von Messpunkten auf Grundlage von Positionsdaten aus einer Satellitenortung und Lagedaten über die Lage des Messsystems im Raum bestimmt werden.

Die bekannten Verfahren und Vermessungsvorrichtungen haben gemein, dass sie zumeist eine ausreichend hohe Qualität der aufgenommenen Daten nicht gewährleisten können. Wie die Erfinder erkannt haben, liegt dies insbesondere daran, dass die bekannten Verfahren und Vermessungsvorrichtungen lediglich eine ungesteuerte Vermessung des Bauwerks vornehmen. Zwar wird teilweise ein zu erreichendes Qualitätsniveau vor der Vermessung vorgegeben, die Einhaltung desselben kann jedoch nicht sichergestellt werden. Insbesondere kann es zu Schwankungen in der Qualität der Aufnahmen kommen, die nur eine unzuverlässige Aussage über an dem Bauwerk befindliche Schäden zulassen. Auch können die bekannten Verfahren bzw. Vermessungsvorrichtungen eine Reproduzierbarkeit der Vermessung bei mehrfacher Aufnahme des Bauwerks nicht gewährleisten.

Ausgehend von dem erläuterten Stand der Technik liegt der Erfindung die Aufgabe zugrunde, bei der Vermessung des Bauwerks ein vorgegebenes Qualitätsniveau sicher einzuhalten, insbesondere eine bestmögliche Vermessungsqualität zu erreichen.

Die Erfindung löst die Aufgabe durch ein Verfahren gemäß Anspruch 1 sowie durch eine Vermessungsvorrichtung gemäß Anspruch 13. Vorteilhafte Ausgestaltungen sind Gegenstand der abhängigen Ansprüche, der Beschreibung sowie der Figuren.

Bei dem erfindungsgemäßen Verfahren der eingangs genannten Art wird ein zu vermessendes Bauwerk mittels einer sich entlang des zu vermessenden Bauwerks bewegenden Vermessungsvorrichtung vermessen, wobei die Vermessungsvorrichtung mindestens einen Vermessungssensor zur Vermessung des Bauwerks und eine den mindestens einen Vermessungssensor tragende Trägerplattform aufweist. Gemäß dem erfindungsgemäßen Verfahren wird mindestens ein Qualitätssollwert für zumindest ein die Qualität der Vermessung kennzeichnendes Qualitätsmerkmal vorgegeben und es werden während der Vermessung ein oder mehrere dieses Qualitätsmerkmal beeinflussende Parameter derart geregelt, dass der vorgegebene Qualitätssollwert im Wesentlichen erreicht wird.

Die erfindungsgemäße Vermessungsvorrichtung umfasst mindestens einen Vermessungssensor zur Vermessung eines Bauwerks und eine den mindestens einen Vermessungssensor tragende Trägerplattform, wobei weiterhin eine Steuereinheit vorgesehen ist, die dazu ausgebildet ist, mindestens einen Qualitätssollwert für zumindest ein die Qualität der Vermessung kennzeichnendes Qualitätsmerkmal vorzugeben und während der Vermessung ein oder mehrere dieses Qualitätsmerkmal beeinflussende Parameter derart zu regeln, dass der vorgegebene Qualitätssollwert im Wesentlichen erreicht wird.

Die erfindungsgemäße Vermessungsvorrichtung ist zur Ausführung des erfindungsgemäßen Verfahrens geeignet und ausgebildet. Insbesondere ist die Steuereinheit der Vermessungsvorrichtung zur Ausführung des erfindungsgemäßen Verfahrens ausgebildet und geeignet. Das erfindungsgemäße Verfahren kann folglich mit der erfindungsgemäßen Vorrichtung ausgeführt werden. Im Folgenden werden Verfahren und Vorrichtung gemeinsam erläutert. Für das Verfahren gemachte Ausführungen und erläuterte Ausgestaltungen beziehen sich ebenso auf die Vorrichtung und andersherum.

Erfindungsgemäß ist grundsätzlich die Vermessung eines Bauwerks vorgesehen. Bei dem Bauwerk handelt es sich beispielsweise um ein wassernahes Bauwerk wie eine Spundwand oder vergleichbare Ufereinfassungen bzw. Hafenbauwerke. Die Trägerplattform der Vermessungsvorrichtung kann beispielsweise schwimmfähig sein. Die Vermessungsvorrichtung kann somit dazu ausgebildet sein, das Bauwerk vom Wasser aus zu vermessen. Der mindestens eine Vermessungssensor oder zumindest einer der Vermessungssensoren kann auf einer Sensorplattform angeordnet sein. Die Sensorplattform kann relativ zu der Trägerplattform beweglich sein, insbesondere translatorisch und/oder verschwenkbar, um u.a. ungewünschte Bewegungen der Trägerplattform während der Vermessungsfahrt zu kompensieren. Zur Vermessung des Bauwerks bewegt sich die Trägerplattform mitsamt dem mindestens einen Vermessungssensor, also insbesondere die gesamte Vermessungsvorrichtung, an dem Bauwerk entlang. Die Trägerplattform ist also beweglich ausgestaltet zur Durchführung einer Vermessungsfahrt. Beispielsweise kann die Trägerplattform einen eigenen Antrieb aufweisen. So kann es sich bei der Trägerplattform beispielsweise um ein Schiff oder Boot handeln. Auch kann eine separate Antriebseinheit vorgesehen sein, beispielsweise ein Schiff oder Boot, welche die Trägerplattform hinter sich herzieht. Die Sensorplattform kann von der Trägerplattform entkoppelt sein, beispielsweise über ein Hexapod oder ein Planetengetriebe.

Die Trägerplattform kann generell beispielsweise durch ein Landfahrzeug, ein Wasserfahrzeug oder ein Fluggerät, insbesondere ein unbemanntes Landfahrzeug, Wasserfahrzeug oder Fluggerät, bewegt werden. Bei dem Wasserfahrzeug kann es sich um ein Boot oder Schiff handeln, wie erwähnt, oder auch um ein Unterwasserfahrzeug, bspw. eine unbemannte U-Boot-Drohne. Die Vermessungsvorrichtung kann dazu ausgebildet sein, das zu vermessende Bauwerk vom Wasser, aus der Luft oder von der Straße aus aufzunehmen. Bei dem aufgenommenen Bauwerk kann es sich insbesondere um ein Gebäude, eine Brücke, eine Ufereinfassungen bzw. ein Hafenbauwerk, eine Straße oder auch andere Bauwerke handeln. Der mindestens eine Vermessungssensor kann ausgewählt sein aus der Menge: Laserscanner, Kamera, insbesondere Thermalkamera, Range-Kamera, Echolot, Multibeam-Sensoren, Side-Scan-Sonar. Der Laserscanner kann insbesondere ein 2D-Profilscanner oder 3D-Scanner sein. Der mindestens eine Vermessungssensor kann bei einem Wasserfahrzeug als Trägerplattform unter oder über Wasser angeordnet sein. Sind mehrere Vermessungssensoren vorgesehen, können einige über, andere unter Wasser angeordnet sein. Mit einem unter Wasser angeordneten Sensor kann beispielsweise der unter Wasser liegende Teil einer Spundwand vermessen werden. Es können insbesondere mehrere Vermessungssensoren vorgesehen sein. Die Vermessungssensoren können ein Multi-Sensor-System bilden, wie eingangs erwähnt. Die Vermessungsvorrichtung kann mindestens eine Lokalisierungseinheit aufweisen zur Bestimmung einer Position und/oder Lage der Vermessungsvorrichtung. Die Lokalisierungseinheit kann beispielsweise ein Empfänger für ein globales Navigationssignal (GNSS) und/oder eine inertiale Messeinheit (IMU) sein. Über die Lokalisierungseinheit kann somit insbesondere die Position im Raum sowie auch die Lage der Vermessungsvorrichtung, insbesondere der Sensorplattform, bestimmt werden. Insbesondere gibt die IMU die Raumwinkel, das GNSS den Azimutwinkel und die Position. Diese Positions- und Lagedaten können mit den durch die Vermessung aufgenommenen Bauwerkdaten des Bauwerks verknüpft werden, wie eingangs bereits angesprochen. Auch können aus den ermittelten Positionsdaten, insbesondere mittels der Lokalisierungseinheit, als erste Ableitung die Geschwindigkeit und/oder als zweite Ableitung die Beschleunigung ermittelt werden.

Die Qualität der Vermessung bezeichnet insbesondere die Qualität der aufgenommenen Bauwerkdaten, also der Bauwerksdaten. Die Qualität der Vermessung wird durch ein oder mehrere Qualitätsmerkmale definiert. Insbesondere können die Qualität bzw. die Qualitätsmerkmale zu verstehen sein als ein Qualitätsmaß nach bekannten DIN-Normen aus dem Vermessungswesen. Als Qualitätsmerkmale werden vorliegend insbesondere die Genauigkeit, Präzision, Auflösung, Zuverlässigkeit, Vollständigkeit oder Reproduzierbarkeit der aus der Bauwerkserfassung gewonnenen Bauwerkdaten angesehen. Auch kann die für die Vermessung benötigte Zeit ein Qualitätsmerkmal bilden. Die Qualität ergibt sich insbesondere aus dem Zusammenspiel dieser Qualitätsmerkmale. Diese Qualitätsmerkmale werden beeinflusst durch eine Vielzahl von Parametern. Ein solcher die Qualität beeinflussender Parameter kann beispielsweise der Abstand zwischen dem mindestens einen Vermessungssensor und dem Bauwerk oder auch die Ausrichtung des mindestens einen Vermessungssensors zu dem Bauwerk sein.

Erfindungsgemäß werden diese Parameter so geregelt, dass der vorgegebene Qualitätssollwert im Wesentlichen erreicht wird. Im Wesentlichen bedeutet hierbei bis auf einen ggf. vorgesehenen Toleranzwert oder Toleranzbereich um den Sollwert. Als Erreichen des Sollwerts wird auch ein Übererfüllen des Sollwerts verstanden. Die Regelung des Parameters kann umfassen, dass ein Sollwert für den Parameter vorgegeben, während der Vermessung ein Istwert des Parameters ermittelt, der Istwert mit dem Sollwert verglichen und bei einer Abweichung zwischen dem Istwert und dem Sollwert der Parameter auf den Sollwert geregelt wird. Der Qualitätssollwert kann derart festgelegt sein, dass eine bestmögliche Qualität oder auch beliebiges für den jeweiligen Anwendungsfall gewünschtes Qualitätsniveau erreicht wird. Auch können nach einer Ausgestaltung mehrere Qualitätssollwerte für unterschiedliche, die Qualität der Vermessung kennzeichnende Qualitätsmerkmale vorgegeben und während der Vermessung diese Qualitätsmerkmale beeinflussende Parameter derart geregelt werden, dass die vorgegebenen Qualitätssollwerte erreicht werden.

Beispielsweise kann als Qualitätssollwert eine Auflösung von 2 cm am Bauwerk vorgegeben sein. Das Qualitätsmerkmal ist dann also die Auflösung der Bauwerkdaten. Bis zu einem Abstand von beispielsweise maximal 5 m zwischen Vermessungssensor und Bauwerk kann diese Auflösung erreicht, bei einem größeren Abstand unter Umständen jedoch nicht mehr sichergestellt werden. Sollte die beispielsweise als Boot ausgebildete Trägerplattform aufgrund von Wind und Strömung weiter von dem Bauwerk fortdriften als 5 m, kann das Boot durch Änderung des azimutalen Richtungswinkels wieder näher an das Bauwerk herangebracht werden und zwar soweit bis die Auflösung von 2 cm wieder erreicht oder übererfüllt wird. Es wird somit der Abstand zwischen Bauwerk und Vermessungssensor derart geregelt, dass der Qualitätssollwert erreicht wird.

Auch können nach einer Ausgestaltung bei einer Übererfüllung des mindestens einen Qualitätssollwerts ein oder mehrere weitere die Qualität der Vermessung kennzeichnende Qualitätsmerkmale optimiert werden. Unter Optimierung ist hierbei zu verstehen, dass der oder die weiteren Qualitätsmerkmale derart angepasst werden, dass in Summe ein gewünschtes Qualitätsniveau oder eine bestmögliche Qualität erreicht wird. Beispielsweise kann der Abstand des Vermessungssensors zum Bauwerk 3 m betragen, obwohl ein Abstand von 5 m unter Einhaltung eines Qualitätssollwerts von 2 cm für die Auflösung möglich wäre. Es kann dann der Abstand zwischen Vermessungssensor und Bauwerk vergrößert werden und/oder die Fahrtgeschwindigkeit der Trägerplattform erhöht werden, um eine schnellere Erfassung (= weiteres Qualitätsmerkmal) zu ermöglichen und das zu untersuchende Bauwerk wieder schneller freigeben zu können. Somit kann auch das Qualitätsmerkmal "Erfassungszeit" optimiert werden. In einem weiteren Beispiel ist die Genauigkeit als erstes Qualitätsmerkmal besser als durch den entsprechenden Qualitätssollwert gefordert. Es kann dann die Vollständigkeit als zweites Qualitätsmerkmal durch aufwändigere Befahrung des Bauwerks erhöht werden oder die Erfassungszeit durch eine höhere Fahrtgeschwindigkeit der Trägerplattform verringert werden. Andersherum gilt dasselbe.

Bei der erfindungsgemäßen Vermessung kann also nicht nur ein Qualitätsniveau für die Vermessung vorgegeben sondern auch die Einhaltung desselben sichergestellt werden. Es wird aktiv in den Vermessungsprozess eingegriffen, um zu erreichen, dass der Qualitätssollwert erreicht wird. Insbesondere werden die das jeweilige Qualitätsmerkmal beeinflussenden Parameter so lange geregelt, bis ein aktuell ermittelter Qualitätsistwert den Qualitätssollwert bis auf eine definierte Toleranz erreicht oder übertrifft. Dann ist keine weitere Regelung notwendig. Es können jedoch weiterhin Istwerte ermittelt werden und es kann weiterhin überprüft werden, ob die Istwerte dem Sollwert entsprechen. Sollte wieder eine Abweichung auftreten, kann entsprechend erneut nachgeregelt werden. Zur erfindungsgemäßen Regelung kann ein Regelkreis vorgesehen sein. Es erfolgt also eine Regelung insbesondere derart, dass eine vorgegebene Qualität erreicht wird, beispielsweise eine ausreichend hohe Auflösung der Bauwerkdaten. Auch kann eine Regelung derart erfolgen, dass eine bestmögliche Qualität, beispielsweise eine möglichst hohe Auflösung der Bauwerkdaten, erreicht wird. Als Maß für das Erreichen eines vorgegebenen Qualitätsniveaus bzw. des vorgegebenen Qualitätssollwerts kann dabei insbesondere die Standardabweichung von einem Erwartungswert oder ein Konfidenzbereich um den Erwartungswert dienen. Ein hohes Qualitätsmaß wird insbesondere dann erreicht, wenn die Standardabweichung möglichst gering ist. Das Verfahren kann teil- oder insbesondere vollautomatisch ablaufen. Ein Qualitätssollwert kann zunächst manuell vorgegeben werden. Das anschließende Regelungsverfahren der Parameter kann vollautomatisch erfolgen. Wie die Erfinder erkannt haben, können die eingangs erläuterten bekannten Verfahren und Vermessungsvorrichtungen ein vorgegebenes Qualitätsniveau deswegen nicht einhalten, da diese die Qualität der aufgenommenen Daten nicht systematisch modellieren und berücksichtigen sondern lediglich eine ungesteuerte Vermessung des Bauwerks vornehmen. Durch die erfindungsgemäße Regelung der die Qualität beeinflussenden Parameter zu Erreichung des Qualitätssollwerts, also insbesondere die aktive Ausrichtung der Vermessungssensoren relativ zum Bauwerk, kann die Einhaltung der Qualität sichergestellt werden.

Nach einer Ausgestaltung wird der mindestens eine Vermessungssensor zur Regelung des oder der Parameter automatisch relativ zu dem Bauwerk ausgerichtet und/oder relativ zu dem Bauwerk positioniert. Die Vermessungsvorrichtung kann entsprechend ausgebildet sein. Beispielsweise kann der mindestens eine Vermessungssensor über Aktoren relativ zu der Trägerplattform verstellt werden. Beispielsweise kann der mindestens eine Vermessungssensor oder eine den Vermessungssensor tragende Sensorplattform über ein Hexapod in allen sechs räumlichen Freiheitsgraden verstellt werden. Der Hexapod kann zentral auf der Trägerplattform angeordnet sein. Auch kann eine Verstellung des Vermessungssensors über bspw. ein Rohrgestänge erfolgen. Die Aktoren ermöglichen die Verstellung des mindestens einen Vermessungssensors insbesondere translatorisch oder auch um eine oder mehrere Rotationsachsen. Eine Ausrichtung des mindestens einen Vermessungssensors relativ zu dem Bauwerk kann insbesondere über eine Neigung des Sensors relativ zum Bauwerk um eine oder mehrere Rotationsachsen erfolgen. Eine Positionierung des mindestens einen Vermessungssensors relativ zu dem Bauwerk kann über translatorische Verstellung des Sensors relativ zum Bauwerk erfolgen, insbesondere in drei Dimensionen. Beispielsweise kann der Sensor über Aktoren relativ zu der Trägerplattform translatorisch in der Höhe, in Fortbewegungsrichtung der Trägerplattform oder entgegen dieser sowie senkrecht zu dieser zu den Seiten beweglich sein. Auch kann die gesamte Trägerplattform durch einen Fahrantrieb mitsamt dem Sensor relativ zu dem Bauwerk bewegt werden. Durch das nach dieser Ausgestaltung vorgesehene Ausrichten bzw. Positionieren des Vermessungssensors wird die Einhaltung des Qualitätssollwerts erreicht. Der Vermessungssensor muss während der Vermessungsfahrt nicht manuell nachgestellt werden, um eine gewünschte Positionierung oder Ausrichtung relativ zum Objekt beizubehalten. Die Position des mindestens einen Vermessungssensors in Bezug auf das Bauwerk kann insbesondere den Abstand zwischen dem mindestens einen Vermessungssensor und dem Bauwerk oder die Höhenposition des mindestens einen Vermessungssensors relativ zu dem Bauwerk umfassen. Die Position des mindestens einen Vermessungssensors in Bezug auf das Bauwerk und die Ausrichtung des mindestens einen Vermessungssensors in Bezug auf das Bauwerk können dabei als die Qualität beeinflussende Parameter verstanden werden, wie später noch erläutert wird.

Nach einer Ausgestaltung wird die Qualität der erfolgten Vermessung auf Grundlage des Parameters oder der Parameter bestimmt. Die Steuereinheit kann entsprechend ausgebildet sein. Insbesondere kann die Qualität der erfolgten Vermessung, also der im Rahmen der Vermessung aufgenommenen Objektdaten, auf Grundlage der im Rahmen der Vermessung aufgenommenen Istwerte der Parameter bereits während der Vermessung bestimmt werden. Beispielsweise können die Istwerte des Parameters während des Vermessungsvorgangs aufgezeichnet werden. Die Vermessungsvorrichtung kann hierfür eine Speichereinheit aufweisen. Basierend auf den aufgezeichneten Ist-Werten kann somit insbesondere bereits während der Vermessung die tatsächliche Qualität der Vermessung, also ein oder mehrere Qualitätsistwerte für die Qualitätsmerkmale, bestimmt werden. Es kann dann eine Abweichung zwischen dem jeweiligen Qualitätsistwert und dem jeweiligen Qualitätssollwert bestimmt und erfindungsgemäß geregelt werden bis der Qualitätsistwert dem Qualitätssollwert entspricht. Nach dieser Ausgestaltung wird anhand des mindestens einen Parameters, insbesondere anhand einer Vielzahl von die Qualität der Vermessung beeinflussenden Parametern, die Qualität der Bauwerkaufnahme, insbesondere ein Qualitätsistwert für das Qualitätsmerkmal berechnet. Für jeden der Parameter kann eine Einflussfunktion bestimmt werden, die den Einfluss des jeweiligen Parameters auf das Qualitätsmerkmal und damit die Qualität beschreibt. Aus den aufgezeichneten Istwerten kann ermittelt werden, welche Qualität der Bauwerkdaten tatsächlich erreicht wurde. So kann ermittelt werden, wie nahe die tatsächlich erreichte an der geforderten Qualität liegt.

Nach einer Ausgestaltung sind als die Qualität der Vermessung beeinflussender Parameter einer oder mehrere aus der folgenden Menge vorgesehen: Position des mindestens einen Vermessungssensors in Bezug auf das Bauwerk, Abstand zwischen dem mindestens einen Vermessungssensor und dem Bauwerk, Höhenposition des mindestens einen Vermessungssensors relativ zu dem Bauwerk, Ausrichtung des mindestens einen Vermessungssensors zu dem Bauwerk, Drift der Trägerplattform, Ausrichtung der Trägerplattform, Fahrgeschwindigkeit der Trägerplattform, Beschleunigung der Trägerplattform, Scanrate des mindestens einen Vermessungssensors, Messfrequenz des mindestens einen Vermessungssensors. Auch kann der Öffnungswinkel oder die Intensitätsmesswerte eines Multibeam ein solcher Parameter sein, der die Qualität beeinflusst. Mit steigendem Öffnungswinkel erhöht sich das Rauschen. Bei den erfindungsgemäß geregelten Parametern kann es sich also um einen oder mehrere dieser Parameter handeln. Aus dem vorgegebenen Qualitätssollwert können Sollwerte für den oder die Parameter abgeleitet werden. Erfolgt für mehrere der Parameter eine erfindungsgemäße Regelung, können die Sollwerte für die einzelnen Parameter, insbesondere auch unter Berücksichtigung der jeweils anderen Parameter festgelegt werden. So kann beispielsweise ein Sollwert für den Abstand zwischen Vermessungssensor und Bauwerk nicht nur nach dem Qualitätsmerkmal einer möglichst großen Auflösung der Bauwerkdaten festgelegt werden, sondern auch auf Grundlage einer zu erreichenden Ausrichtung des Vermessungssensors zu dem Bauwerk. So kann es sinnvoll sein, einen etwas größeren Abstandswert als Sollwert vorzugeben, als für eine ideale Auflösung wünschenswert wäre, wenn dafür eine bessere Ausrichtung des Vermessungssensors zu dem Bauwerk erreicht werden kann, wenn also insbesondere ein als Sollwert vorgegebener Ausrichtungswert dadurch besser erreicht werden kann. Grundsätzlich kann durch die Regelung des Abstands zwischen Vermessungssensor und Bauwerk beispielsweise eine ausreichend hohe Auflösung als Qualitätssollwert erreicht werden. Durch Regelung der Ausrichtung des Sensors relativ zu dem Bauwerk kann ebenfalls die Auflösung Qualitätssollwert erreicht werden. So können beispielsweise durch Regelung der Ausrichtung des Sensors Schrägaufnahmen des Bauwerks, also insbesondere schräge Auftreffwinkel für aktiv messende Sensoren wie Laserscanner oder Multibeam, vermieden oder zumindest verringert werden. Solche Schrägaufnahmen sorgen häufig für ein starkes Rauschen und eine schlechte Auflösung. Durch Regelung der Ausrichtung des Sensors können zudem Einflüsse von Wind und Wellen berücksichtigt werden. Sollte es sich um eine schwimmende Trägerplattform handeln, ergibt sich häufig aufgrund von Wellengang die Schwierigkeit, den oder die Vermessungssensoren in der vorgegebenen Ausrichtung zu dem Bauwerk zu halten. Durch die erfindungsgemäße Regelung kann dies jedoch erreicht werden. Durch die erfindungsgemäße Regelung eines oder mehrerer dieser Parameter kann der mindestens eine Vermessungssensor automatisch relativ zu dem Bauwerk ausgerichtet und/oder relativ zu dem Bauwerk positioniert werden, wie oben erläutert. Die Position des mindestens einen Vermessungssensors in Bezug auf das Bauwerk kann insbesondere eine Position in drei Dimensionen sein. Es kann dabei der Abstand zwischen dem mindestens einen Vermessungssensor und dem Bauwerk sowie die Höhenposition des mindestens einen Vermessungssensors relativ zu dem Bauwerk in der Position enthalten bzw. aus dieser ableitbar sein.

Nach einer Ausgestaltung kann zur Regelung der Ausrichtung des mindestens einen Vermessungssensors zu dem Bauwerk der Vermessungssensor, insbesondere eine den Vermessungssensor aufweisende Sensorplattform, relativ zu der Trägerplattform, um zumindest eine Rotationsachse, verstellt werden und/oder es kann zur Regelung der Höhenposition des mindestens einen Vermessungssensors relativ zu dem Bauwerk der mindestens eine Vermessungssensor, insbesondere eine den Vermessungssensor aufweisende Sensorplattform, relativ zu der Trägerplattform translatorisch in der Höhe verstellt werden und/oder es kann zur Regelung des Abstands zwischen dem mindestens einen Vermessungssensor und dem Bauwerk der mindestens eine Vermessungssensor, insbesondere eine den Vermessungssensor aufweisende Sensorplattform, relativ zu der Trägerplattform translatorisch zu den Seiten verstellt und/oder die Trägerplattform mittels eines Antriebs zu dem Bauwerk hinbewegt oder von dem Bauwerk fortbewegt werden. Der Vermessungssensor bzw. die Sensorplattform können also, wie bereits erwähnt, relativ zu der Trägerplattform translatorisch verstellbar bzw. verschwenkbar ausgebildet sein. Insbesondere kann der mindestens eine Vermessungssensor bzw. die gesamte Sensorplattform um zwei oder auch drei zueinander senkrechte Rotationsachsen verschwenkbar bzw. um zwei oder auch drei zueinander senkrechte Translationsachsen verstellbar zu der Trägerplattform angeordnet sein. Die Ausrichtung des Sensors zum Bauwerk bzw. der gesamten Sensorplattform zum Bauwerk kann somit um bis zu drei senkrechte Rotationsachsen erfolgen, die Positionierung um bis zu drei Translationsachsen. Zur Erreichung des Qualitätssollwerts kann die Ausrichtung als Parameter durch eine solche Verschwenkung des Sensors insbesondere über die bereits angesprochenen Aktoren erfolgen. Auch kann zur Regelung des Abstands zwischen dem mindestens einen Vermessungssensor und dem Bauwerk die Trägerplattform mittels eines Antriebs zu dem Bauwerk hinbewegt oder von dem Bauwerk fortbewegt werden, wie erwähnt. Wie bereits angesprochen, kann die Trägerplattform selbst aktiv angetrieben sein, beispielsweise kann es sich um ein Boot oder Schiff handeln. Auch kann die Trägerplattform durch eine separate Antriebseinheit, beispielsweise ein die Trägerplattform ziehendes Boot, angetrieben sein. Dieser, die Trägerplattform zur Vermessung entlang des Bauwerks bewegende Antrieb kann auch dazu dienen, die Trägerplattform und damit die Sensorplattform zu dem Bauwerk hin oder von diesen fort zu bewegen. Grundsätzlich kann jedoch auch ein weiterer Antrieb hierfür vorgesehen sein. Sollte der Qualitätssollwert nicht erreicht werden, wird entsprechend nachgeregelt. Sollte also beispielsweise der Abstandsistwert größer sein als ein zur Erreichung des Qualitätssollwerts notwendig wird die Trägerplattform und damit der Vermessungssensor zu dem Bauwerk hinbewegt. Sollte der Abstandsistwert kleiner sein wird entsprechend die Trägerplattform mittels des Antriebs von dem Bauwerk fortbewegt. Die Bewegung erfolgt bis wieder der Qualitätssollwert erreicht ist.

Außer dem erläuterten Abstand und der Ausrichtung des Vermessungssensors relativ zum Bauwerk können jedoch auch kinematische Parameter der Trägerplattform als die Qualität der Vermessung beeinflussende Parameter von Bedeutung sein, wie bereits angesprochen. So kann als Parameter beispielsweise eine Drift der Trägerplattform geregelt werden. Auch kann die Fahrgeschwindigkeit oder die Beschleunigung der Trägerplattform als Parameter in der erfindungsgemäßen Weise geregelt werden. Es kann von Bedeutung sein, dass die Trägerplattform zur Vermessung eine bestimmte Sollgeschwindigkeit einhält, um eine ausreichend hohe und insbesondere gleichmäßige Auflösung der Bauwerkdaten zu ermöglichen. Aufgrund unterschiedlichster Einflussfaktoren, wie beispielsweise Wind oder auch Wasserbewegungen, kann es jedoch zu einer Abweichung einer einmal eingestellten Fahrgeschwindigkeit der Trägerplattform als Sollwert kommen. Daher kann auch hier eine erfindungsgemäße Regelung sinnvoll sein.

Nach einer Ausgestaltung umfasst der mindestens eine Vermessungssensor zumindest einen elektromagnetische Strahlung oder Schallwellen aussendenden Sensor, wobei die Ausrichtung des Sensors zu dem Bauwerk derart erfolgt, dass die durch den Sensor ausgesendete Strahlung oder die oder Schallwellen in einem definierten Winkel, insbesondere senkrecht, auf die Oberfläche des Bauwerks treffen. Der Vermessungssensor kann beispielsweise ein Laserscanner sein, der Laserstrahlung im Wesentlichen linienförmig auf das Bauwerk richtet und von dem Bauwerk reflektierte Laserstrahlung detektiert. Die erfindungsgemäße Regelung kann für die Ausrichtung als Parameter dabei ebenso erfolgen, dass der Laserstrahl senkrecht auf die Oberfläche des zu erfassenden Bauwerks, also des Bauwerks, trifft. Es werden somit schräge Auftreffwinkel vermieden, was wie erläutert ein starkes Rauschen in den Bauwerkdaten und insbesondere eine schlechte Auflösung der Bauwerkdaten zur Folge haben kann. Für besonders glatte Oberflächen kann es jedoch sinnvoll sein, senkrecht auftreffende Strahlung zu vermeiden, da es ansonsten zu einem Überstrahlen des Sensors kommen kann. Es kann also gerade ein vom rechten Winkel abweichender Winkel vorgesehen sein.

Nach einer Ausgestaltung wird während der Vermessung die Position und/oder die Lage der Vermessungsvorrichtung im Raum bestimmt und den während der Vermessung aufgenommenen Bauwerkdaten zugeordnet. Dies kann insbesondere über die bereits erwähnte Lokalisierungseinheit erfolgen. So kann beispielsweise ein Empfänger für ein globales Navigationssignal (GNSS), insbesondere GPS, und/oder eine inertiale Messeinheit (IMU) zum Einsatz kommen. Auch kann ein auf die Vermessungsvorrichtung gerichtetes Tachymeter bei der Positionsbestimmung zum Einsatz kommen, insbesondere falls eine Positionsbestimmung über das GNSS-Signals nicht ausreichend zuverlässig möglich sein sollte, beispielsweise aufgrund einer Abschattung.

Nach einer Ausgestaltung wird das Bauwerk mehrfach vermessen und durch Vergleich der Messungen auf eine Bauwerkveränderung geschlossen. Eine solche Bauwerkveränderung kann beispielsweise das Auftreten und die weitere Entwicklung eines Schadens an dem Bauwerk sein. Durch mehrfache Messung kann also insbesondere die zeitliche Entwicklung eines Schadens vermessen werden. Somit können Bauwerkaufnahmen verschiedener Epochen miteinander abgeglichen werden und somit letztlich eine qualitätsgesicherte, reproduzierbare und objektive Aussage über eine Bauwerkveränderung getroffen werden. Die Bauwerkveränderung kann beispielsweise auch in Form von Neigungen, Torsionen, Lage- oder Höhenänderungen des Bauwerks vorliegen. Im Fall der Schadensentwicklung können die Veränderung des Schadens in Größe, Tiefe, Länge und Breite überwacht werden. Vor allem kann aufgrund von mehrfachen Messungen umso zuverlässiger die Bestimmung von Sollwerten für die Parameter für die erfindungsgemäße Regelung erfolgen. Auch können Bauwerkveränderungen eine Anpassung der Sollwerte für die Parameter erfordern.

Nach einer Ausgestaltung wird der mindestens eine Qualitätssollwert einer Routenplanung zugrunde gelegt. Die Routenplanung betrifft die Festlegung einer Route, welche die Vermessungsvorrichtung entlang des Bauwerks bzw. des Bauwerks zur Vermessung des Bauwerks/Bauwerks abfahren soll. Zur Vermessung des Bauwerks fährt die Vermessungsvorrichtung, also letztlich die angetriebene Trägerplattform, wie erläutert, das Bauwerk ab. Für eine solche Vermessungsfahrt wird nach dieser Ausgestaltung auf Grundlage des Qualitätssollwerts eine Route festgelegt, welche das Erreichen des Qualitätssollwerts ermöglicht. Hierfür fließen in die Routenplanung die Parameter ein, die das Qualitätsmerkmal beeinflussen. So können im Rahmen der Routenplanung als Parameter insbesondere die erläuterten kinematischen Parameter der Trägerplattform, also insbesondere die Geschwindigkeit der Trägerplattform sowie zum anderen auch Abstand und Ausrichtung des Sensors bzw. der Sensorplattform zu dem Bauwerk einfließen. Für jeden der Parameter kann hierfür, wie bereits angesprochen, eine Einflussfunktion bestimmt werden, die den Einfluss des jeweiligen Parameters auf das Qualitätsmerkmal und damit die Qualität beschreibt. Die Route kann eine Trajektorie, also einen durch die Trägerplattform abzufahrenden Fahrweg als Positionsdaten der Trägerplattform über der Zeit, umfassen sowie auch Vorgaben für weiter Stellgrößen. So kann nach einer Ausgestaltung die geplante Route Vorgaben für eine oder mehrere der folgenden Stellgrößen umfassen: Trajektorie der Trägerplattform, Fahrtgeschwindigkeit der Trägerplattform, Beschleunigung der Trägerplattform, Ausrichtung des mindestens einen Vermessungssensors zu dem Bauwerk, das Material und/oder die Oberfläche des Bauwerks berücksichtigende Größen. Je mehr Stellgrößen in die Routenplanung einfließen, desto höher ist am Ende die Qualität der Bauwerkaufnahme. Im Rahmen der Routenplanung können also einige oder mehrere der erläuterten Parameter berücksichtigt werden. In die Trajektorie kann beispielsweise der Abstand zwischen Vermessungssensor und Bauwerks als Parameter einfließen. So kann die Vorgabe eines definierten Abstands zwischen Bauwerk und Objekt für das Erreichen des Qualitätssollwerts förderlich sein. Zusätzlich zu den erläuterten Parametern kann als Stellgröße im Rahmen der Routenplanung auch das Material bzw. die Oberfläche des zu untersuchenden Bauwerks einfließen. Beispielsweise kann die geplante Route Vorgaben für die Ausrichtung des Vermessungssensors relativ zu dem Bauwerk umfassen. Die Ausrichtung kann bspw. derart vorgegeben werden, dass über möglichst die gesamte Route durch den Vermessungssensor ausgesendete Strahlung in einem definierten Winkel auf die Oberfläche des Bauwerks trifft. Beispielsweise kann dies ein rechter Winkel sein, wie oben erläutert. Für Abschnitte des Bauwerks mit besonders glatter Oberfläche kann ein vom rechten Winkel abweichender Winkel vorgegeben werden, um ein Überstrahlen des Sensors zu vermeiden.

Nach einer Ausgestaltung wird im Rahmen der Routenplanung ein das Bauwerk umgebender Bewegungsbereich der Trägerplattform in Sektoren unterschiedlicher Vermessungsqualität unterteilt, wobei die geplante Route durch die Sektoren gelegt wird, die ein Erreichen des Qualitätssollwerts erwarten lassen. Zur Festlegung einer optimalen Route für die Vermessungsfahrt können die möglichen Bereiche für die Trajektorie, also den Korridor der Fortbewegung der Trägerplattform, anhand der jeweiligen Parameter nach ihrer Qualität untergliedert werden. Es können sich somit Sektoren in dem Bewegungsbereich um das Bauwerk herum ergeben, die eine bessere Qualität der Vermessung erwarten lassen als andere Sektoren. Die Route kann dann insbesondere derart durch die Sektoren gelegt werden, dass der vorgegebene Qualitätssollwert und damit ein vorgegebenes Qualitätsniveau, insbesondere eine möglichst hohe Vermessungsqualität, erreicht wird. Die Sektoreneinteilung kann beispielsweise durch ein Ampel-System erfolgen, wobei Sektoren die unterschiedliche Qualitäten der Vermessung erwarten lassen unterschiedliche Farben oder Schattierungen aufweisen. Beispielsweise können Sektoren, die eine höhere Qualität der Vermessung erwarten lassen, grün und Sektoren, die eine geringere Qualität der Vermessung erwarten lassen, rot gekennzeichnet werden. Auch können Sektoren, die eine höhere Qualität der Vermessung erwarten lassen, ein einfarbig oder weiß und Sektoren, die eine geringere Qualität der Vermessung erwarten lassen, gestrichelt gekennzeichnet werden. Auch kann eine gezielte Berechnung zu erreichender Qualitätsstufen erfolgen, insbesondere auf Grundlage einer die Qualität definierenden Standardabweichung. Beispielsweise kann ein Raster erzeugt werden für die zu erwartende Genauigkeit der Vermessung als Qualität, wobei eine Route dann so gelegt wird, dass die Standardabweichungen zu dem jeweiligen Genauigkeitswert möglichst gering sind.

Nach einer Ausgestaltung gibt die Route eine Trajektorie der Trägerplattform vor, wird während der Vermessung die tatsächliche Trajektorie mit der vorgegebenen Trajektorie verglichen und es wird bei einer Abweichung zwischen vorgegebener Trajektorie und tatsächlicher Trajektorie die Trajektorie auf die vorgegebene Trajektorie geregelt. Es kann somit eine insbesondere automatische Regelung auf die geplante Route erfolgen. Dies kann geschehen, indem die im Rahmen der Routenplanung vorgegebenen Parameter in der erfindungsgemäßen Weise geregelt werden. Im Rahmen der Routenplanung kann beispielsweise eine Trajektorie festgelegt werden, die für jeden der Sektoren eine bestimmte Ausrichtung des Sensors sowie einen bestimmten Abstand des Sensors zum Bauwerk vorsieht. Die Planungswerte für diese Parameter können in einigen Sektoren jeweils die gleichen sein, können sich jedoch auch in jedem Sektor unterscheiden. Beispielsweise kann es für einen Sektor sinnvoll sein, den Vermessungssensor näher an das zu erfassende Bauwerk zu bringen, um so eine gewünschte Ausrichtung des Sensors zu dem Bauwerk zu erreichen. In einem darauffolgenden Sektor kann es wiederum sinnvoll sein, den Abstand zwischen Sensor und Bauwerk zu vergrößern. Durch eine Regelung der Trajektorie auf die vorgegebene Trajektorie kann diese besonders gut eingehalten werden. Die Plattform kann hierfür beispielsweise über drei Unterwasserantriebe verfügen und so nicht nur die Position sondern auch die Ausrichtung variieren.

Eine Ausgestaltung der Erfindung wird im Folgenden anhand von Figuren erläutert.

Es zeigen:
- Figur 1: eine erfindungsgemäße Vermessungsvorrichtung,
- Figur 2: die Vermessung einer Spundwand mit der Vermessungsvorrichtung aus Figur 1,
- Figur 3: eine im Rahmen einer Routenplanung festgelegte Trajektorie für die Vermessungsvorrichtung, und
- Figur 4: die Vermessung einer Spundwand sowie eines Gewässerbodens in mehreren Fahrten.

Soweit nichts anderes angegeben ist, bezeichnen im Folgenden gleiche Bezugszeichen gleiche Gegenstände.

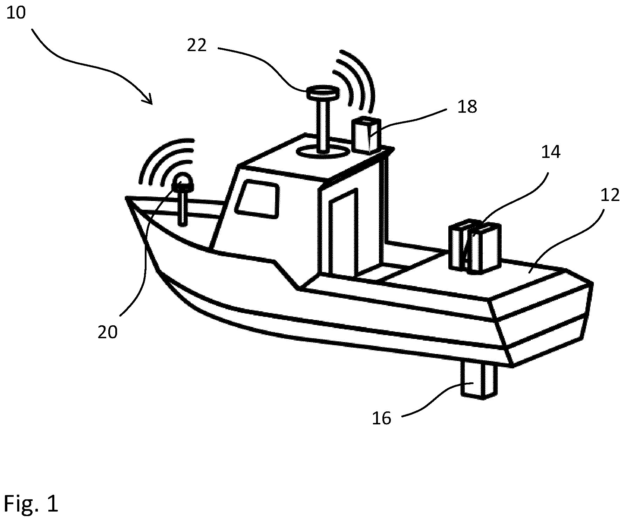

Figur 1 zeigt eine erfindungsgemäße Vermessungsvorrichtung 10 zur Vermessung eines Hafenbauwerks. Die Vermessungsvorrichtung 10 umfasst eine schwimmfähige Trägerplattform 12 in Form eines Boots, einen Überwasserscanner 14, einen Unterwasserscanner 16, eine Kamera 18 sowie einen GNSS-Empfänger 20. Die Vermessungssensoren 14, 16 und 18 dienen der Vermessung eines Bauwerks. Die Vermessungssensoren 14 bis 18 können in nicht dargestellter Weise auf einer gemeinsamen Sensorplattform angeordnet sein. Weiterhin ist ein Reflektor 22 auf der Trägerplattform 12 angeordnet. Die Vermessungsvorrichtung 10 verfügt zudem über einen an der Trägerplattform angeordneten, nicht dargestellten Antrieb, mit welchem die Trägerplattform 12 aktiv angetrieben und somit zu einer Vermessungsfahrt entlang eines Bauwerks bewegt werden kann

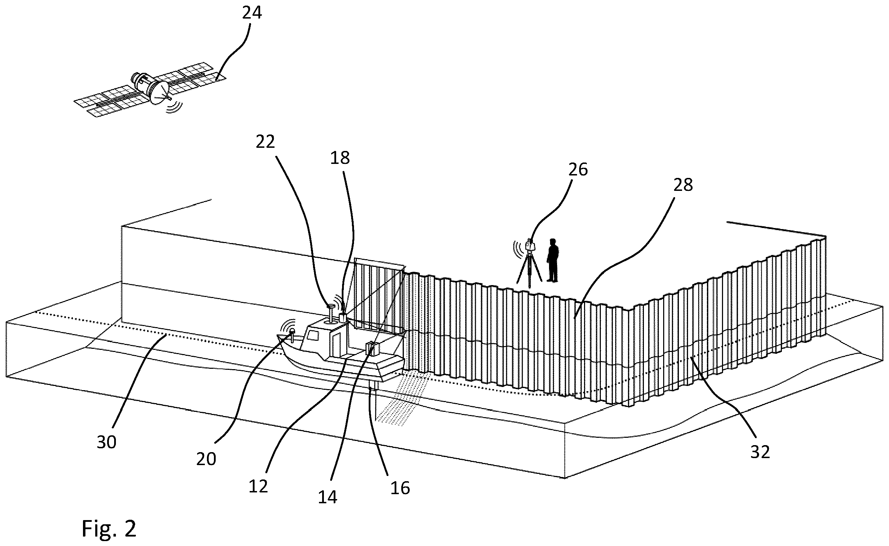

Figur 2 zeigt die Vermessungsvorrichtung 10 bei der Vermessung eines wassernahen Bauwerks, nämlich vorliegend einer Spundwand 28. An Land ist zudem ein Tachymeter 26 angeordnet. Das Tachymeter 26 ist auf den Reflektor 22 der Trägerplattform 12 ausgerichtet. Das Tachymeter ist jedoch grundsätzlich optional und insbesondere für das erfindungsgemäße Verfahren nicht von Nöten. Es kann jedoch zum Einsatz kommen, falls das GNSS-Signal beispielsweise aufgrund einer Abschattung keine genauen Daten liefert. Die Vermessungsvorrichtung 10 bewegt sich entlang einer Trajektorie 30 an der Spundwand 28 entlang und untersucht diese mit ihren Vermessungssensoren 14, 16 und 18. Die bereits vermessene Fläche der Spundwand 28 ist durch eine dreidimensionale Struktur in Figur 2 ersichtlich. Die Vermessungssensoren 14 bis 18 erfassen bei ihrer Vermessung Bauwerkdaten der Spundwand, wie beispielsweise Schäden, in an sich bekannter Weise. So können die Sensoren 14, 16 beispielsweise Laserscanner sein, die aus den Signallaufzeiten sowie der Rückstreuintensität Informationen über das Relief und aus Rückstrahldaten die Oberflächenbeschaffenheit der Spundwand als Bauwerkdaten liefern können. Auch kann der Scanner 16 ein Echolot sein, welches entsprechende Daten liefert. Der Sensor 18 kann eine Kamera sein, welche Farbaufnahmen der Spundwand liefert. Die über die Sensoren 14 bis 18 ermittelten Bauwerkdaten der Spundwand können über eine Steuereinheit mit Positionsdaten der Trägerplattform 12 verknüpft werden. Zur Positionsbestimmung der Trägerplattform 12 dient zum einen der GNSS-Empfänger 20, welcher in an sich bekannter Weise GNSS-Signale von Satelliten 24 eines globalen Navigationssattelitensystems empfängt, sowie eine nicht dargestellte inertiale Messeinheit. Auch über das Tachymeter 26 kann die Position der Vermessungsvorrichtung 10 bestimmt werden, insbesondere dann, wenn das GNSS-Signal nicht zur Verfügung steht.

Im Rahmen einer Routenplanung wurde die Soll-Trajektorie 30 festgelegt. Der Festlegung dieser Trajektorie lag ein gewünschtes, für die Vermessung zu erreichendes Qualitätsniveau zugrunde. Dieses Qualitätsniveau wird durch mehrere Qualitätsmerkmale beeinflusst, wobei zumindest für eines der Qualitätsmerkmale ein Qualitätssollwert vorgegeben wurde. In die Routenplanung und damit in die Trajektorie geht hierfür insbesondere, als ein die Qualität der Vermessung beeinflussender Parameter, der Abstand eines oder mehrerer der Vermessungssensoren 14 bis 18 zu der Spundwand 28 ein. Während der Fahrt der Vermessungsvorrichtung 10 entlang der Spundwand wird dabei ein Abstand der Vermessungsvorrichtung und damit der jeweiligen Sensoren zu der Spundwand 28 derart geregelt, dass der Qualitätssollwert erreicht wird. Die Vermessungsvorrichtung 10 wird entlang der Soll-Trajektorie 30 in einem vorbestimmten Abstand zur Spundwand 28 gehalten. Somit wird letztlich die Einhaltung der geplanten Route geregelt. Es kann somit erreicht werden, dass die tatsächlich durch die Vermessungsvorrichtung 10 abgefahrene Ist-Trajektorie 32 der Soll-Trajektorie 30 möglichst nahekommt.

Durch Einhaltung dieser Trajektorie und damit der vorgegebenen Parameter kann eine besonders zuverlässige und reproduzierbare Vermessung erfolgen. Insbesondere kann so eine qualitätsgesicherte Bauwerkaufnahme gewährleistet werden. Hierfür wird für jeden der Parameter eine Einflussfunktion definiert, die den Einfluss des Parameters auf die Qualität beschreibt.

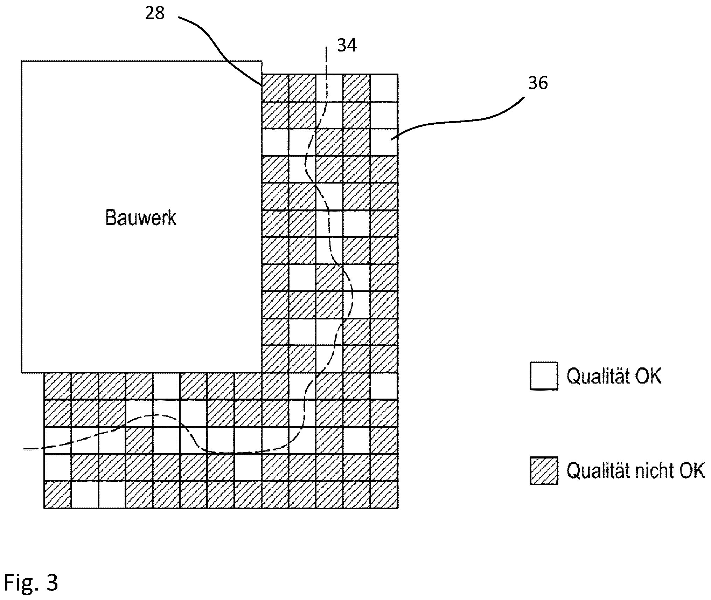

In die Routenplanung können weitere Parameter einfließen. Diese Parameter können insbesondere auch in der erfindungsgemäßen Weise derart geregelt werden, dass der Qualitätssollwert erreicht wird. Neben dem bereits erwähnten Abstand der Sensoren und damit der Vermessungsvorrichtung zur Spundwand kann dies auch die Ausrichtung der Sensoren zu der Spundwand sein. Beispielsweise können auch Geschwindigkeit oder Beschleunigung der Trägerplattform sowie eine Ausrichtung der Trägerplattform solche Parameter bilden. Aufgrund von Erfahrungswerten oder Schätzwerten werden für die zu regelnden Parameter zunächst Vorgabewerte festgelegt. Auf Grundlage dieser Vorgabewerte wird eine abzufahrende Trajektorie 34 im Rahmen einer Routenplanung festgelegt. Es kann hierdurch ein die Spundwand umgebender Bewegungsbereich der Trägerplattform in Sektoren 36 unterschiedlicher Vermessungsqualität unterteilt werden, wie in Figur 3 ersichtlich. In der Draufsicht in Figur 3 sind die Sektoren 36 als quadratische Flächenelemente ersichtlich. Die Sektoren sind vorliegend in binärer Weise in unterschiedliche Vermessungsqualitäten eingeteilt, nämlich zum einen in eine ausreichende Qualität und zum anderen in eine nicht ausreichende Qualität. In den Sektoren mit "ausreichender Qualität" kann der vorgegebene Qualitätssollwert erreicht werden. Die Trajektorie 34 wird im Rahmen der Routenplanung dabei so gelegt, dass möglichst nur oder zumindest möglichst viele Sektoren mit ausreichender Vermessungsqualität durchfahren werden.

In die Trajektorie können beispielsweise, wie bereits erwähnt, als die Qualität beeinflussende Parameter der Abstand der Vermessungsvorrichtung zur Spundwand sowie die Ausrichtung der Vermessungssensoren zu der Spundwand einfließen. Für die Festlegung der Trajektorie wird versucht, eine insgesamt möglichst hohe Qualität zu erreichen, beispielsweise eine vorgegebene Qualität zu erreichen oder eine möglichst hohe Qualität zu erreichen. Da somit versucht wird, in Summe über alle Parameter eine bestimmte Qualität zu erreichen, kann es sinnvoll sein, zumindest abschnittsweise für einen der Parameter einen eher suboptimalen Sollwert vorzugeben, sofern für einen anderen Parameter ein optimaler Sollwert vorgegeben werden kann. Beispielsweise kann der Abstand der Vermessungsvorrichtung zu dem Bauwerk wie in Figur 3 gezeigt, entlang der Trajektorie variieren. Dies kann sinnvoll sein, da möglicherweise nur so eine gewünschte Ausrichtung der Sensoren zu der Oberfläche der Spundwand gewährleistet werden kann. Insbesondere kann so möglicherweise gewährleistet werden, dass die als Laserscanner ausgebildeten Sensoren mit senkrechtem Strahlgang auf die Oberfläche des Bauwerks treffen.

Erfindungsgemäß werden während der Vermessungsfahrt diese Parameter so geregelt, dass der vorgegebene Qualitätssollwert erreicht wird. Beispielsweise kann als Qualitätssollwert eine Auflösung von 2 cm an der Spundwand 28 vorgegeben sein. Das Qualitätsmerkmal ist dann also die Auflösung der Bauwerkdaten. Bis zu einem Abstand von beispielsweise maximal 5 m zwischen beispielsweise Vermessungssensor 18 und Spundwand 28 kann diese Auflösung erreicht, bei einem größeren Abstand unter Umständen jedoch nicht mehr sichergestellt werden. Sollte die Trägerplattform 12 aufgrund von Wind und Strömung weiter von der Spundwand 28 fortdriften als 5 m, kann die Trägerplattform 12 durch Änderung des azimutalen Richtungswinkels wieder näher an die Spundwand 28 herangebracht werden und zwar soweit bis die Auflösung von 2 cm wieder erreicht oder übererfüllt wird. Es wird somit der Abstand zwischen Spundwand 28 und Vermessungssensor 18 derart geregelt, dass der Qualitätssollwert erreicht wird.

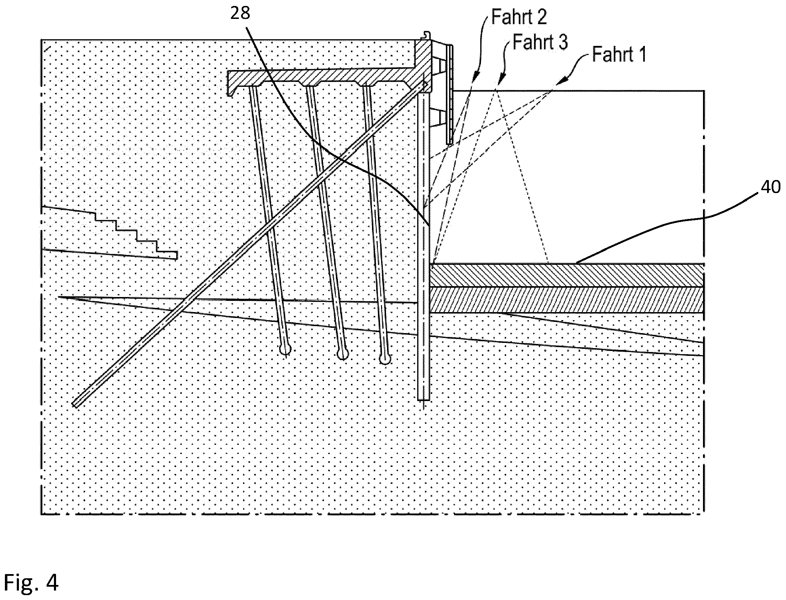

Auch kann ein zu untersuchendes Bauwerk in mehrfachen Fahrten abgescannt werden. Wie in Figur 4 ersichtlich, kann die Spundwand 28 unter Wasser sowie ein Gewässerboden 40 durch unterschiedliche Ausrichtung des Sensors 16 abgescannt werden. Es können also drei Vermessungsfahrten vorgesehen sein, wobei mit einer ersten Vermessungsfahrt ein weiter oberhalb liegender Abschnitt der Spundwand 28 vermessen wird, mit einer zweiten Fahrt der darunterliegende Abschnitt der Spundwand vermessen wird und mit der dritten Fahrt schließlich der anschließende Bereich des Gewässerbodens vermessen wird. Bei all diesen Fahrten kann in der erfindungsgemäßen Weise eine Regelung der die Qualität der Vermessung beeinflussenden Parameter erfolgen.

Beispielhafte Ausführungsformen der Erfindung werden im Folgenden gelistet:
1. Verfahren zur Vermessung eines Bauwerks (28), insbesondere zur Schadenserfassung und Bauüberwachung, mittels einer sich entlang eines zu vermessenden Bauwerks (28) bewegenden Vermessungsvorrichtung (10), wobei die Vermessungsvorrichtung (10) mindestens einen Vermessungssensor (14, 16, 18) zur Vermessung des Bauwerks (28) und eine den mindestens einen Vermessungssensor (14, 16, 18) tragende Trägerplattform (12) aufweist, wobei mindestens ein Qualitätssollwert für zumindest ein die Qualität der Vermessung kennzeichnendes Qualitätsmerkmal vorgegeben wird und während der Vermessung ein oder mehrere dieses Qualitätsmerkmal beeinflussende Parameter derart geregelt werden, dass der vorgegebene Qualitätssollwert im Wesentlichen erreicht wird.
2. Verfahren nach Beispiel 1, dadurch gekennzeichnet, dass, wenn der Qualitätssollwert übererfüllt wird, ein oder mehrere weitere die Qualität der Vermessung kennzeichnende Qualitätsmerkmale optimiert werden.
3.Verfahren nach Beispiel 1 oder 2, dadurch gekennzeichnet, dass als Qualitätsmerkmal eines oder mehrere aus folgender Menge vorgesehen sind: Genauigkeit, Präzision, Auflösung, Zuverlässigkeit, Vollständigkeit oder Reproduzierbarkeit der durch die Vermessung gewonnenen Bauwerkdaten des Bauwerks, für die Vermessung benötigte Zeit.
4.Verfahren nach einem der vorhergehenden Beispiele, dadurch gekennzeichnet, dass der mindestens eine Vermessungssensor (14, 16, 18) zur Regelung des oder der Parameter automatisch relativ zu dem Bauwerk (28) ausgerichtet und/oder relativ zu dem Bauwerk positioniert wird.
5.Verfahren nach einem der vorhergehenden Beispiele, dadurch gekennzeichnet, dass als das mindestens eine Qualitätsmerkmal beeinflussende Parameter einer oder mehrere aus der folgenden Menge vorgesehen sind: Position des mindestens einen Vermessungssensors (14, 16, 18) in Bezug auf das Bauwerk, Abstand zwischen dem mindestens einen Vermessungssensor (14, 16, 18) und dem Bauwerk (28), Höhenposition des mindestens einen Vermessungssensors (14, 16, 18) relativ zu dem Bauwerk (28), Ausrichtung des mindestens einen Vermessungssensors (14, 16, 18) zu dem Bauwerk (28), Drift der Trägerplattform (12), Ausrichtung der Trägerplattform (12), Fahrgeschwindigkeit der Trägerplattform (12), Beschleunigung der Trägerplattform (12), Scanrate des mindestens einen Vermessungssensors (14, 16, 18), Messfrequenz des mindestens einen Vermessungssensors (14, 16, 18).
6.Verfahren nach Beispiel 5, dadurch gekennzeichnet, dass zur Regelung der Ausrichtung des mindestens einen Vermessungssensors (14, 16, 18) zu dem Bauwerk (28) der Vermessungssensor (14, 16, 18), insbesondere eine den Vermessungssensor (14, 16, 18) aufweisende Sensorplattform, relativ zu der Trägerplattform (12) um zumindest eine Rotationsachse verstellt wird und/oder dass zur Regelung der Höhenposition des mindestens einen Vermessungssensors (14, 16, 18) relativ zu dem Bauwerk (28) der mindestens eine Vermessungssensor (14, 16, 18), insbesondere eine den Vermessungssensor aufweisende Sensorplattform, relativ zu der Trägerplattform (12) translatorisch in der Höhe verstellt wird und/oder dass zur Regelung des Abstands zwischen dem mindestens einen Vermessungssensor (14, 16, 18) und dem Bauwerk (28) der mindestens eine Vermessungssensor (14, 16, 18), insbesondere eine den Vermessungssensor aufweisende Sensorplattform, relativ zu der Trägerplattform (12) translatorisch zu den Seiten verstellt und/oder die Trägerplattform (12) mittels eines Antriebs zu dem Bauwerk (28) hinbewegt oder von dem Bauwerk (28) fortbewegt wird.
7.Verfahren nach Beispiel 5 oder 6, dadurch gekennzeichnet, dass der mindestens eine Vermessungssensor (14, 16, 18) zumindest einen elektromagnetische Strahlung oder Schallwellen aussenden Sensor umfasst, wobei die Ausrichtung des Sensors zu dem Bauwerk (28) derart erfolgt, dass die durch den Sensor ausgesendete Strahlung oder die Schallwellen in einem definierten Winkel, insbesondere senkrecht, auf die Oberfläche des Bauwerks (28) treffen.
8.Verfahren nach einem der vorhergehenden Beispiele, dadurch gekennzeichnet, dass während der Vermessung die Position und/oder die Lage der Vermessungsvorrichtung im Raum bestimmt und den während der Vermessung aufgenommenen Bauwerkdaten zugeordnet wird.
9.Verfahren nach einem der vorhergehenden Beispiele, dadurch gekennzeichnet, dass das Bauwerk (28) mehrfach vermessen und dass durch Vergleich der Messungen auf eine Bauwerksveränderung geschlossen wird.
10.Verfahren nach einem der vorhergehenden Beispiele, dadurch gekennzeichnet, dass der mindestens eine Qualitätssollwert einer Routenplanung zugrunde gelegt wird.
11.Verfahren nach Beispiel 10, dadurch gekennzeichnet, dass die geplante Route Vorgaben für eine oder mehrere der folgenden Stellgrößen umfasst: Trajektorie (34) der Trägerplattform (12), Fahrtgeschwindigkeit der Trägerplattform (12), Beschleunigung der Trägerplattform (12), Ausrichtung des mindestens einen Vermessungssensors zu dem Bauwerk (28), das Material und/oder die Oberfläche des Bauwerks berücksichtigende Stellgrößen.
12.Verfahren nach Beispiel 10 oder 11, dadurch gekennzeichnet, dass im Rahmen der Routenplanung ein das Bauwerk (28) umgebender Bewegungsbereich der Trägerplattform (12) in Sektoren (36) unterschiedlicher Vermessungsqualität unterteilt wird, wobei die geplante Route durch die Sektoren gelegt wird, die den vorgegebenen Qualitätssollwert mindestens erreichen.
13.Vermessungsvorrichtung zur Vermessung eines Bauwerks, insbesondere zur Schadenserfassung und Bauüberwachung, umfassend mindestens einen Vermessungssensor (14, 16, 18) zur Vermessung des Bauwerks (28) und eine den mindestens einen Vermessungssensor (14, 16, 18) tragende Trägerplattform (12), wobei weiterhin eine Steuereinheit vorgesehen ist, die dazu ausgebildet ist, mindestens einen Qualitätssollwert für zumindest ein die Qualität der Vermessung kennzeichnendes Qualitätsmerkmal vorzugeben und während der Vermessung ein oder mehrere dieses Qualitätsmerkmal beeinflussende Parameter derart zu regeln, dass der vorgegebene Qualitätssollwert im Wesentlichen erreicht wird.
14.Vermessungsvorrichtung (10) nach Beispiel 13, dadurch gekennzeichnet, dass die Trägerplattform (12) durch ein Landfahrzeug, insbesondere ein unbemanntes Landfahrzeug, ein Wasserfahrzeug, insbesondere ein unbemanntes Wasserfahrzeug, oder ein Fluggerät, insbesondere ein unbemanntes Fluggerät, bewegt wird.
15. Vermessungsvorrichtung (10) nach Beispiel 13 oder 14, dadurch gekennzeichnet, dass mindestens ein Vermessungssensor (14, 16, 18) ausgewählt ist aus der Menge: Laserscanner, Kameras, insbesondere Thermalkamera, Range-Kameras, Echolot, Multibeam-Sensoren, Side-Scan-Sonar und/oder dass die Vermessungsvorrichtung (10) mindestens eine Lokalisierungseinheit aufweist zur Bestimmung einer Position und/oder Orientierung der Vermessungsvorrichtung (10).

## Patentansprüche

1. Verfahren zur Vermessung eines Bauwerks (28), insbesondere zur Schadenserfassung und Bauüberwachung, mittels einer sich entlang eines zu vermessenden Bauwerks (28) bewegenden Vermessungsvorrichtung (10), wobei die Vermessungsvorrichtung (10) mindestens einen Vermessungssensor (14, 16, 18) zur Vermessung des Bauwerks (28) und eine den mindestens einen Vermessungssensor (14, 16, 18) tragende Trägerplattform (12) aufweist, wobei mindestens ein Qualitätssollwert für zumindest ein die Qualität der Vermessung kennzeichnendes Qualitätsmerkmal vorgegeben wird und während der Vermessung ein aktueller Qualitätsistwert ermittelt und ein oder mehrere das Qualitätsmerkmal beeinflussende Parameter derart geregelt werden, dass der aktuell ermittelte Qualitätsistwert den vorgegebenen Qualitätssollwert im Wesentlichen erreicht.

2. Verfahren nach Anspruch 1, **dadurch gekennzeichnet, dass**, wenn der Qualitätssollwert übererfüllt wird, ein oder mehrere weitere die Qualität der Vermessung kennzeichnende Qualitätsmerkmale optimiert werden.

3. Verfahren nach Anspruch 1 oder 2, **dadurch gekennzeichnet, dass** als Qualitätsmerkmal eines oder mehrere aus folgender Menge vorgesehen sind: Genauigkeit, Präzision, Auflösung, Zuverlässigkeit, Vollständigkeit oder Reproduzierbarkeit der durch die Vermessung gewonnenen Bauwerkdaten des Bauwerks, für die Vermessung benötigte Zeit.

4. Verfahren nach einem der vorhergehenden Ansprüche, **dadurch gekennzeichnet, dass** der mindestens eine Vermessungssensor (14, 16, 18) zur Regelung des oder der Parameter automatisch relativ zu dem Bauwerk (28) ausgerichtet und/oder relativ zu dem Bauwerk positioniert wird.

5. Verfahren nach einem der vorhergehenden Ansprüche, **dadurch gekennzeichnet, dass** als das mindestens eine Qualitätsmerkmal beeinflussende Parameter einer oder mehrere aus der folgenden Menge vorgesehen sind: Position des mindestens einen Vermessungssensors (14, 16, 18) in Bezug auf das Bauwerk, Abstand zwischen dem mindestens einen Vermessungssensor (14, 16, 18) und dem Bauwerk (28), Höhenposition des mindestens einen Vermessungssensors (14, 16, 18) relativ zu dem Bauwerk (28), Ausrichtung des mindestens einen Vermessungssensors (14, 16, 18) zu dem Bauwerk (28), Drift der Trägerplattform (12), Ausrichtung der Trägerplattform (12), Fahrgeschwindigkeit der Trägerplattform (12), Beschleunigung der Trägerplattform (12), Scanrate des mindestens einen Vermessungssensors (14, 16, 18), Messfrequenz des mindestens einen Vermessungssensors (14, 16, 18).

6. Verfahren nach Anspruch 5, **dadurch gekennzeichnet, dass** zur Regelung der Ausrichtung des mindestens einen Vermessungssensors (14, 16, 18) zu dem Bauwerk (28) der Vermessungssensor (14, 16, 18), insbesondere eine den Vermessungssensor (14, 16, 18) aufweisende Sensorplattform, relativ zu der Trägerplattform (12) um zumindest eine Rotationsachse verstellt wird und/oder dass zur Regelung der Höhenposition des mindestens einen Vermessungssensors (14, 16, 18) relativ zu dem Bauwerk (28) der mindestens eine Vermessungssensor (14, 16, 18), insbesondere eine den Vermessungssensor aufweisende Sensorplattform, relativ zu der Trägerplattform (12) translatorisch in der Höhe verstellt wird und/oder dass zur Regelung des Abstands zwischen dem mindestens einen Vermessungssensor (14, 16, 18) und dem Bauwerk (28) der mindestens eine Vermessungssensor (14, 16, 18), insbesondere eine den Vermessungssensor aufweisende Sensorplattform, relativ zu der Trägerplattform (12) translatorisch zu den Seiten verstellt und/oder die Trägerplattform (12) mittels eines Antriebs zu dem Bauwerk (28) hinbewegt oder von dem Bauwerk (28) fortbewegt wird.

7. Verfahren nach Anspruch 5 oder 6, **dadurch gekennzeichnet, dass** der mindestens eine Vermessungssensor (14, 16, 18) zumindest einen elektromagnetische Strahlung oder Schallwellen aussenden Sensor umfasst, wobei die Ausrichtung des Sensors zu dem Bauwerk (28) derart erfolgt, dass die durch den Sensor ausgesendete Strahlung oder die Schallwellen in einem definierten Winkel, insbesondere senkrecht, auf die Oberfläche des Bauwerks (28) treffen.

8. Verfahren nach einem der vorhergehenden Ansprüche, **dadurch gekennzeichnet, dass** während der Vermessung die Position und/oder die Lage der Vermessungsvorrichtung im Raum bestimmt und den während der Vermessung aufgenommenen Bauwerkdaten zugeordnet wird.

9. Verfahren nach einem der vorhergehenden Ansprüche, **dadurch gekennzeichnet, dass** das Bauwerk (28) mehrfach vermessen und dass durch Vergleich der Messungen auf eine Bauwerksveränderung geschlossen wird.

10. Verfahren nach einem der vorhergehenden Ansprüche, **dadurch gekennzeichnet, dass** der mindestens eine Qualitätssollwert einer Routenplanung zugrunde gelegt wird.

11. Verfahren nach Anspruch 10, **dadurch gekennzeichnet, dass** die geplante Route Vorgaben für eine oder mehrere der folgenden Stellgrößen umfasst: Trajektorie (34) der Trägerplattform (12), Fahrtgeschwindigkeit der Trägerplattform (12), Beschleunigung der Trägerplattform (12), Ausrichtung des mindestens einen Vermessungssensors zu dem Bauwerk (28), das Material und/oder die Oberfläche des Bauwerks berücksichtigende Stellgrößen.

12. Verfahren nach Anspruch 10 oder 11, **dadurch gekennzeichnet, dass** im Rahmen der Routenplanung ein das Bauwerk (28) umgebender Bewegungsbereich der Trägerplattform (12) in Sektoren (36) unterschiedlicher Vermessungsqualität unterteilt wird, wobei die geplante Route durch die Sektoren gelegt wird, die den vorgegebenen Qualitätssollwert mindestens erreichen.

13. Vermessungsvorrichtung zur Vermessung eines Bauwerks, insbesondere zur Schadenserfassung und Bauüberwachung, umfassend mindestens einen Vermessungssensor (14, 16, 18) zur Vermessung des Bauwerks (28) und eine den mindestens einen Vermessungssensor (14, 16, 18) tragende Trägerplattform (12), wobei weiterhin eine Steuereinheit vorgesehen ist, die dazu ausgebildet ist, mindestens einen Qualitätssollwert für zumindest ein die Qualität der Vermessung kennzeichnendes Qualitätsmerkmal vorzugeben und während der Vermessung einen aktuellen Qualitätsistwert zu ermitteln und ein oder mehrere das Qualitätsmerkmal beeinflussende Parameter derart zu regeln, dass der der aktuell ermittelte Qualitätsistwert den vorgegebenen Qualitätssollwert im Wesentlichen erreicht.

14. Vermessungsvorrichtung (10) nach Anspruch 13, **dadurch gekennzeichnet, dass** die Trägerplattform (12) durch ein Landfahrzeug, insbesondere ein unbemanntes Landfahrzeug, ein Wasserfahrzeug, insbesondere ein unbemanntes Wasserfahrzeug, oder ein Fluggerät, insbesondere ein unbemanntes Fluggerät, bewegt wird.

15. Vermessungsvorrichtung (10) nach Anspruch 13 oder 14, **dadurch gekennzeichnet, dass** mindestens ein Vermessungssensor (14, 16, 18) ausgewählt ist aus der Menge: Laserscanner, Kameras, insbesondere Thermalkamera, Range-Kameras, Echolot, Multibeam-Sensoren, Side-Scan-Sonar und/oder dass die Vermessungsvorrichtung (10) mindestens eine Lokalisierungseinheit aufweist zur Bestimmung einer Position und/oder Orientierung der Vermessungsvorrichtung (10).
